# EUROPÄISCHE PATENTSCHRIFT

(11) **EP 3 122 441 B1**
(45) Veröffentlichungstag und Bekanntmachung des Hinweises auf die Patenterteilung: **26.02.2020**
(21) Anmeldenummer: 14830960.2
(22) Anmeldetag: 22.12.2014
(51) Int. Cl.: B01D 53/26, B01D 53/22

(54) **GEHÄUSEKOPF MIT SPÜLLUFTREGLER**
HOUSING HEAD WITH SCAVENGING AIR REGULATOR
TÊTE DE LOGEMENT AVEC RÉGULATEUR D'AIR DE RINÇAGE

(30) Priorität: 28.03.2014 DE 102014104386
(43) Veröffentlichungstag der Anmeldung: 01.02.2017
(73) Patentinhaber: Beko Technologies GmbH, 41468 Neuss (DE)
(72) Erfinder: SINSTEDTEN, Johannes, 41352 Korschenbroich (DE); PRIOR, Thomas, 51519 Odenthal (DE); RAMBOW, Jörg, 41464 Neuss (DE)
(74) Vertreter: Patentanwälte Bauer Vorberg Kayser
(86) Internationale Anmeldenummer: PCT/EP2014/078967
(87) Internationale Veröffentlichungsnummer: WO 2015/144270

(56) Entgegenhaltungen:
- EP-A2- 0 903 173
- JP-A- H0 957 043
- JP-A- H1 133 338
- JP-A- 2001 205 033
- JP-A- 2001 219 026
- US-A1- 2002 162 455
- US-A1- 2003 047 077

## Beschreibung

Die Erfindung bezieht sich auf einen Gehäusekopf für eine Trocknungsvorrichtung für Druckluft, der mit einem Gehäusekörper verbindbar ist, in dem ein Membranfilter, vorzugsweise ein Bündel Hohlfasermembranen, angeordnet ist.

Beim Einsatz von Druckluft, beispielsweise in der Industrietechnik oder der Medizintechnik, ist Feuchtigkeit im Leitungsnetz und an den Verbrauchsstellen ein Qualitätsproblem. Eine wichtige Aufgabe ist daher immer die Trocknung der Druckluft. Hierzu werden Membranfilter eingesetzt, die selektiv durchlässig sind für Wasserdampf. In dem Filtergehäuse ist ein Bündel hochselektiver Hohlfasermembranen angeordnet, durch die feuchte Druckluft strömt. Die feuchte Druckluft ist vorzugsweise gefiltert, damit noch in ihr enthaltene Schmutzpartikel, Ölnebel und Kondensat zurückgehalten werden, also die Hohlfasermembranen nicht verstopfen. Durch die Hohlfasermembranen diffundiert Wasserdampf nach aussen. Am Auslass für getrocknete Druckluft wird ein geringer Teilstrom der Druckluft abgezweigt und nach Expansion als Spülluft benutzt. Die Spülluft wird im Gegenstrom zur Druckluft über die Aussenseite der Hohlfasern geführt. Aufgrund des Unterschiedes in der Wasserdampfkonzentration wird eine ständige Wanderung der Wassermoleküle aus der Druckluft in die Spülluft erreicht. Somit iste der üblicherweise gebräuliche Begriff Membranfilter zumindest missverständlich, da ein Membranfilter nicht mechanisch, sondern durch Diffusion trennt. Der Einfachheit halber wird dieser Begriff dennoch im Rahmen der Erfindung verwendet.

Dieser Vorgang läuft kontinuierlich ab. Die Spülluft trocknet ständig die eintretende, feuchte Druckluft. Nur Wassermoleküle können die Membranen der Hohlfasern durchdringen. Die Zusammensetzung der getrockneten Druckluft bleibt unverändert. Als Ergebnis hat man reine, trockene Druckluft.

Das Volumen des Spülluftstroms wird durch eine Düse definiert, die einen durch den Druck und die Düsengröße bestimmten, konstanten Vollumenstrom passieren lässt. Nachteilig ist, dass bei Teillast oder Nulllast, also dann, wenn wenig oder keine Druckluft angefordert wird, der Spülluftstgrom konstant bleibt, obwohl er nur zum Teil oder gar nicht benötigt wird. Dies führt zu erheblichen Druckverlusten im Gesamtsystem. Um dieses Problem zu verringern, sind Spülluftregler bekannt, deren Aufgabe darin besteht, den Spülluftstrom an die erforderliche Menge anzupassen.

Aus der US-Patentschrift 5,160,514 ist eine Trocknungsvorrichtung für Druckluft mit einem solchen Spülluftregler bekannt, er ist in eine Trockenvorrichtung für Druckluft integriert ist. Hierzu ist der Druckluftausgang der Trockenvorrichtung mit einer Kammer in Verbindung, die durch eine Membran begrenzt ist. Auf der anderen Seite der Membran befindet sich eine weitere Kammer, die über eine Leitung mit dem Drucklufteingang der Trockenvorrichtung verbunden ist. Die Membran nimmt eine Stellung abhängig von der Druckdifferenz zwischen Drucklufteingang und Druckluftausgang ein. Die Membran ist mit einem Ventilelement verbunden, das einen seitlichen Schlitz hat und in einer zugehörigen Innenbohrung des Gehäuses geführt ist. Je nach Stellung der Membran nimmt das Ventilelement eine Position ein, die ein mehr oder weniger starkes Strömen von Druckluft des Druckluftausgangs der Trockenvorrichtung hin zum Eingang der Spülleitung ermöglicht.

Weitere Spülluftregler im Gehäusekopf einer Druckluft-Trocknungsvorrichtung sind aus JP 2001 219026, JP H09 57043, JP H11 33338 bekannt, in US 2002/162455 wird die Spülluft-Menge über ein Durchfussregelventil eingestellt.

Dieser Spülluft-Regler arbeitet nicht zufriedenstellend. Insbesondere bei kleinen Druckdifferenzen zwischen dem Eingangsdruck und dem Ausgangsdruck für Druckluft der Trockenvorrichtung ist das Regelverhalten ungenügend. Weiterhin ist bei großen Druckdifferenzen zwischen Eingangsdruck und Ausgangsdruck der Druckluft der Trockenvorrichtung ein Problem dadurch gegeben, dass die Luft des Druckluftausgangs sowohl den Druck aufbringen muss, als auch strömt. Ein Nachteil bei dieser Lösung ist auch, dass die Regelung auf einen konkreten (durchschnittlichen) Betriebsdruck justiert werden muss. Bei Abweichungen im Betriebsdruck verändert sich das Regelverhalten deutlich. Dies führt zu nicht eindeutigen Verhältnissen.

Hinzu kommt, dass der Differenzdruck auch von der Beladung des Filterelements abhängig ist, der Füllgrad hat Einfluss auf den Differenzdruck und damit auch auf die Regelung der Spülluft. Diese kann sich während der Nutzungsdauer des Filterelements ändern, was unerwünscht ist.

Hiervon ausgehend hat sich die Erfindung die Aufgabe gestellt, einen Gehäusekopf für eine Trocknungsvorrichtung für Druckluft für eine Trockenvorrichtung zu schaffen, die eine verbesserte Regelung oder Schaltung der Spülluft ermöglicht. Es soll eine möglichst empfindliche und schnelle Reaktion auf unterschiedliche Druckluftanforderungen möglich sein, der Gehäusekopf soll dabei aber auch robust und widerstandsfähig aufgebaut sein.

Erfindungsgemäß wird die Aufgabe durch einen Gehäusekopf mit den Merkmalen des Patentanspruchs 1 gelöst.

Die Erfindung geht im wesentlichen zwei Wege: Einerseits schlägt sie vor, den abgezweigten Druckluftstrom, der dem Spüllufteingang zugeführt wird, so zu steuern, dass Spülluft tatsächlich nur dann zur Verfügung steht, wenn Druckluft durch ein druckluftbetriebenes Gerät entnommen wird. In Arbeitspausen, in denen das druckluftbetriebene Gerät nicht benutzt wird, ist der Spülluftstrom abgeschaltet oder zumindest soweit herunter, dass deutlich weniger Druckluft für die Entfeuchtung verbraucht wird. Es kann aber auch eine Regelung in Abhängigkeit vom entnommenen Druckluftstrom erfolgen, indem mehr oder weniger Spülluft zur Verfügung gestellt wird, wenn mehr oder weniger Druckluft für ein nachgeschaltetes, druckluftbetriebenes Gerät entnommen wird.

Wird Druckluft entnommen, stellt sich auf der Abströmseite der Rollmembran ein verringerter Druck ein, was dazu führt, dass sich der Ventilring entlang dem Grundkörper bewegt und den Überströmkanal sowie den Spülluftkanal freigibt.

Ein wesentlicher Vorteil des erfindungsgemäßen Gehäusekopfs bzw. Spülluftreglers besteht darin, dass der Spülluftschalter erst bei bestimmten Differenzdrücken arbeitet und schaltet. Bei Druckabfall im Austrittsbereich wird das Kräftegleichgewicht an der Membrane beeinflusst und die höhere Kraft unterhalb der Membrane hebt diese an. Beide Schalterseiten, über die der Differenzdruck sich ergibt, liegen am Austritt des Systems und damit ist der Spülluftschalter vom Differenzdruck im System unabhängig. Der Ventilring öffnet die Öffnungen des Spülluftkanals und des Überstromkanals unmittelbar und in Abhängigkeit des auf die Rollmembran wirkenden Drucks. Dies erlaubt eine ausgesprochen empfindliche Reaktion auf Druckänderungen, die Öffnung erfolgt schnell und direkt.

In der Ausgangslage, also ohne Druckluftanforderung, ist der Ringraum zwischen der Außenseite des Innenrohrs und der Innenseite der Außenwand des Gehäuseabschnitts durch die Rollmembran verschlossen. Die Rollmembran ist dabei an der Außenseite festgehalten und an der Außenseite entlang einer Längsachse des Innenrohrs und des umgebenden koaxialen Gehäuseabschnitts nicht verschiebbar. Dagegen liegt der Ventilring mit dem die Rollmembran an ihrer Innenseite verbunden ist, auf einer Bodenfläche des Grundkörpers, der das Innenrohr umgibt, auf und kann durch Druckluft, die auf eine Anströmseite der Rollmembran wirkt, entlang der Längsachse einer Ventilringführung bzw. des geraden Abschnitts des Innenrohrs verschoben werden. Durch die Bewegung des Ventilrings werden der Überström- und der Spülluftkanal freigegeben, so dass zum einen getrocknete Druckluft durch den Auslass ausströmen kann, zum anderen Spülluft über einen Spülluftkanal zurück außen über die Hohlfasern entgegen der Durchflussrichtung der feuchten Druckluft im Inneren der Hohlfasern geführt wird. und entgegen der Strömungsrichtung der trockenen Luft am Membranfilter zurückströmen kann.

Der sich auf Grund der Druckluftbewegung bzw. des Differenzdruckes abhebende bzw. bewegende Ventilring gibt also zwei Strömungswege frei, einen Strömungsweg für die trockene Luft zum Auslass und einen Strömungsweg für trockene Luft, die als Spülluft benutzt werden soll.

In einer besonders vorteilhaften Ausführungsvariante nimmt auch der Grundkörper in Einbaulage in seiner quer zur Längsachse verlaufenden Querrichtung den gesamten Ringraum zwischen der Außenseite des Innenrohrs und der Innenseite der Außenwand ein. In Strömungsrichtung der getrockneten Druckluft ist der Grundkörper vor der Ringmembran angeordnet und topfförmig ausgebildet. In seiner Bodenfläche weist der Grundkörper entsprechende Durchgangsöffnungen auf, durch die die Druckluft gegen die Anströmseite der Rollmembran geleitet wird.

Der Ventilring liegt in seiner Ausgangslage innerhalb des topfförmigen Grundkörpers und spannt die Rollmembran mit einem Ventilringunterteil und einem Ventilringoberteil ein. Auf der in Querrichtung gegenüberliegenden Seite ist die Rollmembran mit Hilfe eines Spannrings am Grundkörper festgehalten. Der Durchmesser des Spannrings ist derart gewählt, dass dieser an der Innenseite der Außenwand des Gehäuseabschnitts anliegt.

Der wesentliche Vorteil eines derart aufgebauten Grundkörpers mit Ventilring besteht darin, dass dieser als zusammenhängende Funktionseinheit in den Gehäusekopf einsetzbar ist. Der Grundkörper ist zu diesem Zweck auf seiner Außenseite über einen Dichtring gegen die Innenseite der Außenwand des Gehäuseabschnitts abgedichtet.

Vorteilhafterweise ist der Ventilring über ein Federelement in seiner Ausgangsstellung gehalten, so dass dieser dann in seine Ausgangsstellung zurückgetrieben wird, wenn keine Druckluftanforderung eines Abnehmers besteht.

Als Federelement kann eine Schraubenfeder dienen, die zwischen dem Ventilring und einer Abstützfläche im Inneren des Gehäusekopfes angeordnet ist. Das Federelement liegt auf dem Ventilring auf, so dass dieser über die Abstützfläche gegen die Strömungsrichtung in seine Ausgangslage gedrückt wird. Bei einer Druckluftentnahme überwindet die Druckluft die Federkraft und bewegt den Ventilring. Anstelle einer Schraubenfeder sind auch andere geeignete Federelemente einsetzbar, sowohl Druck- als auch Zugfedern.

Der Ventilring liegt in seiner Ausgangsstellung vor einer Eingangsöffnung dem Spülluftkanal, dessen erster Abschnitt im Wesentlichen quer zur Längsachse des Innenrohrs verläuft. Ein sich daran anschließender zweiter Abschnitt des Spülluftkanals verläuft parallel zum Innenrohr und geht in einen dritten Abschnitt über, der wieder quer zur Längsachse des Innenrohrs verläuft. Über den Spülluftkanal wird die trockene Luft weiter in den Bereich außen um die Hohlfasern geführt. Erfindungsgemäß kann lediglich ein einziger Spülluftkanal vorgesehen sein, es können aber auch mehrere gleichmäßige um das Innenrohr herum verteilte Spülluftkanäle sinnvoll sein.

Der mindestens eine Überströmkanal ist durch eine entlang der Längsachse des Innenrohrs verlaufende und in die von der Rollmembran wegweisende Richtung sich vorteilhafterweise vertiefende Nut im Grundkörper ausgebildet. Durch die zunehmende Vertiefung nimmt der Durchmesser des offenen Überströmkanals bei sich bewegendem Ventilring kontinuierlich zu, wodurch ein sprunghafter Anstieg des Überströmquerschnitts vermieden wird. Ein möglichst konstanter Anstieg des Überstromquerschnitts bewirkt, dass die Membran ruhige Bewegungen vollführt und nicht flattert. Vorteilhafterweise können die Nuten auch so ausgeführt sein, dass sie bereits in der Ausgangslage einen geringen Strömungsquerschnitt freigeben, um ein plötzliches Öffnen und damit ein Flattern zu vermeiden.

Grundsätzlich sind verschiedene Ausführungsformen des Überströmkanals denkbar. Beispielsweise kann auf dem Grundkörper bzw. der Ventilringführung nur eine einzige Nut vorgesehen sein, vorzugsweise sind aber mehrere Nuten vorhanden, die gleichmäßig über den Außenumfang des Innenrohrs verteilt angeordnet sind. Alternativ zu einzelnen Überströmkanälen kann auch die gesamte Ventilringführung kontinuierlich verjüngend ausgeführt sein, so dass keine einzelnen Nuten vorgesehen sein müssen. In der Ausgangsstellung liegt der Ventilring dann an einem Bereich mit größtem Durchmesser der Ventilringführung an. Bewegt sich der Ventilring wird durch die Verjüngung automatisch ein Überströmenvon Druckluft ermöglicht. Um eine gleichmäßige Bewegung des Ventilrings zu gewährleisten, sollten entlang der Längsachse des Innenrohrs auf dessen Außenseite Führungselemente, beispielsweise Rippen, vorgesehen sein, die ein Verkippen des Ventilrings verhindern.

Die Antströmfläche der Rollmembran ist relativ groß und macht den Einsatz eines relativ starken Federelements möglich, was wiederrum die Reproduzierbarkeit eines Schaltpunkts deutlich verbessert. Durch die erhöhte Stellkraft ist zudem die Anfälligkeit gegenüber mechanischen Einflüssen reduziert. Insgesamt ist nur ein geringer Materialeinsatz auf Grund der kompakten Bauweise notwendig.

In einer besonders vorteilhaften Ausführungsvariante sind der Ventilring und der Grundkörper derart ausgeformt, dass auch in der Ausgangsstellung, wenn keine Druckluft entnommen wird, ein minimaler Schleichluftstrom in den Spülluftkanal zurückgeführt werden kann. Vorzugsweise weist der Ventilring im Bereich seiner Anlage am Spülluftkanal einen kleinen Durchlass auf, durch den permanent trockene Schleichluft in den Spülluftkanal geleitet wird. Diese Schleichluft dient auch der Kontrolle des Druckluftsystems.

Der Grundkörper des Ventilrings kann auf einem Innenrohr angeordnet sein, das vollständig dem Gehäusekopf zuzuordnen ist. Alternativ ist es erfindungsgemäß aber auch möglich, dass in den Grundkörper bzw. die Ventilringführung ein freies Ende des Innenrohrs und ein freies Ende eines Kernrohrs hineinragt. Das Kernrohr ist dem Membranfilterelement zuzuordnen, das innerhalb des Gehäuses angeordnet ist, mit dem der Gehäusekopf verbindbar ist. Somit dient der Grundkörper, auch als Verbindungsteil zwischen dem Gehäusekopf und dem damit verbindbaren Membranfilterelement.

Das Innenrohr ist über Dichtungsringe auf seiner Außenseite gegen den Grundkörper abgedichtet. Umgibt der Grundkörper sowohl das Innenrohr als auch das Kernrohr, ist auch das Kernrohr über Dichtungsringe gegenüber dem Grundkörper abgedichtet.

Im Rahmen der Beschreibung der Erfindung wird der Einfachheit halber der Begriff Spülluftregler verwendet, da mit Hilfe der erfindungsgemäßen Vorrichtung je nach Ausführung auch ein Regeln der Spülluftströme möglich ist, auch wenn im Wesentlichen Ausführungsvarianten beschriebenen werden, mit denen die Spülluft lediglich gesteuert wird. Der Spülluftkanal kann, wie bereits beschrieben, als einfache Bohrung ausgeführt sein, denkbar ist erfindungsgemäß aber auch ein längliche Schlitz oder mehrere Bohrungen, durch die mehr oder weniger Spülluft geleitet werden kann.

Das Steuerverhalten ist abhängig von der Gestaltung der Spülluftabzweigung bzw. des Spülluftkanals und Rückstellkräften. Die auf den Spülluftschalter wirken. Somit kann mittels einer Rückstellfeder das Steuerverhalten beeinflusst werden, mit einem verstellbaren Gegenlager ist erfindungsgemäß auch eine Kalibrierung möglich

Die Erfindung wird anhang der nachfolgenden Figuren näher erläutert. Diese sollen nicht einschränkend zu verstehen sein, sondern zeigen lediglich Prinzipdarstellungen des Standes der Technik und der Erfindung. Es zeigen:
- Fig. 1:: einen Membrantrockner nach dem Stand der Technik im Querschnitt,
- Fig. 2:: eine vergrößerte Darstellung eines Gehäusekopfs eines Membrantrockners nach dem Stand der Technik im Querschnitt.
- Fig. 3:: eine perspektivische Darstellung eines erfindungsgemäßen Gehäusekopfs im Querschnitt,
- Fig. 4:: eine perspektivische Explosionszeichnung eines erfindungsgemäßen Spülluftschalters,
- Fig. 5:: eine perspektivische Darstellung des Spülluftschalters aus Figur 4 in Ausgangslage, teilweise geschnitten,
- Fig. 6:: eine Ausschnittvergrößerung des Bereichs I aus Figur 5,
- Fig. 7:: eine Ausschnittvergrößerung des Abschnitts II aus Figur 5,
- Fig. 8:: eine Prinzipdarstellung der Fluidströme durch den Gehäusekopf im Querschnitt,
- Fig. 9:: eine zweite Prinzipdarstellung der Fluidströme durch den Gehäusekopf in Ausgangslage des Ventilrings,
- Fig. 10:: eine dritte Prinzipdarstellung der Fluidströme durch den Gehäusekopf mit vom Ventilsitz abgehobenem Ventilring
- Fig. 11:: den erfindungsgemäßen Spülluftschalter im Querschnitt mit abgehobenem Ventilring.

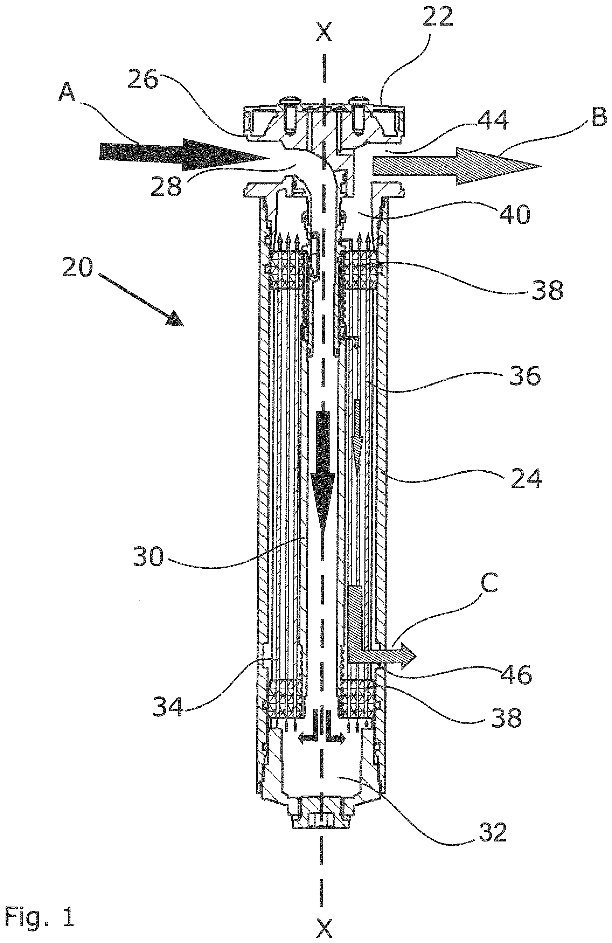

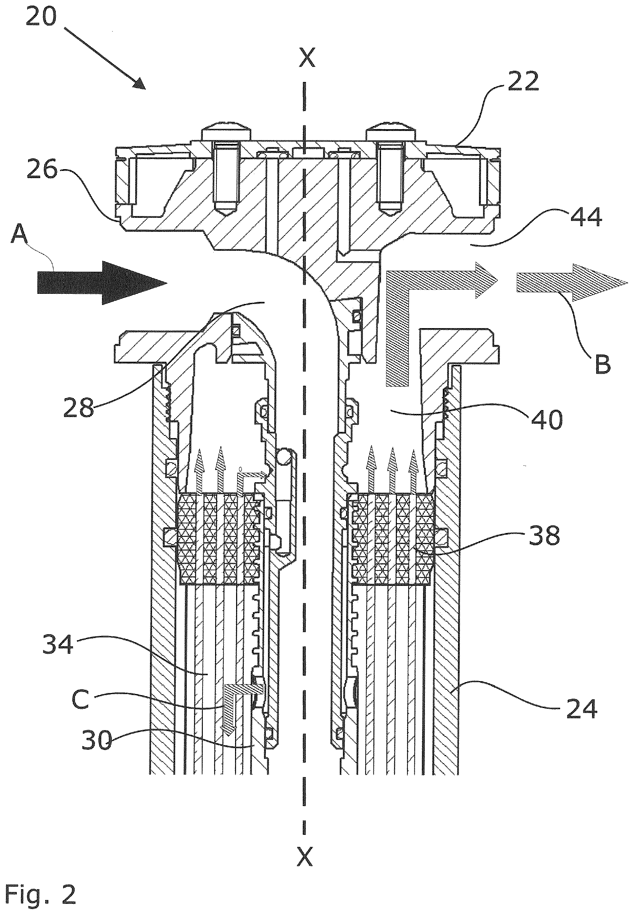

Aus den Figuren 1 und 2 wird die Funktion eines gattungsgemäßen Membrantrockners 20 nach dem Stand der Technik deutlich. Dieser weist einen Gehäusekopf 22 auf, an den ein Gehäuse 24 druckdicht angeschraubt ist. Der Gehäusekopf 22 weist einen Einlass 26 auf, der in ein Innenrohr 28 übergeht. Im gezeigten Ausführungsbeispiel hat das Innenrohr 28 eine Krümmung von etwa 90 ° und geht in einen geraden Bereich über, der entlang einer Längsachse X-X verläuft.

An das Innenrohr 28 schließt sich ein Kernrohr 30 an, dessen Länge kürzer als die Gesamtlänge des Gehäuses 24 ist. Am freien Ende des Kernrohrs 30 bildet sich deshalb ein Austrittsraum 32 innerhalb des Gehäuses 24 an, in den die Druckluft aus dem Kernrohr 30 austritt und in einen Gehäuseringraum 34 umgeleitet wird. Der Gehäuseringraum 34 befindet sich zwischen einer Außenwand des Kernrohrs 30 und einer Innenwand des Gehäuses 24.

Innerhalb des Gehäuseringraums 34 sind Hohlfasern 36 angeordnet, die aus porösem Trägermaterial mit einer wasserdampfpermablen Beschichtung bestehen. Die Hohlfasern 36 sind im gezeigten Ausführungsbeispiel durch Halteelemente 38 gehalten. Die Halteelemente 38 leiten die Druckluft außerdem ausschließlich in das Innere der Hohlfasern 36.

Der Gehäuseringraum 34 geht in einen Ringraum 40 über, der im Wesentlichen im Gehäusekopf 22 angeordnet ist. Der Ringraum 40 befindet sich zwischen einer Außenseite des Innenrohrs 28 und einer Innenseite einer Wand 42 des Gehäusekopfs 22. An diesen Ringraum 40 schließt sich in Strömungsrichtungder Druckluft ein Auslass 44 an.

In den Figuren 1 und 2 und teilweise auch in den nachfolgenden Figuren sind die Fluidströme durch Pfeile gekennzeichnet, wobei feuchte Druckluft mit A, trockene Druckluft mit B, Spülluft mit C und Schleichluft mit D bezeichnet ist. Die Figuren 1 und 2 verdeutlichen, dass der Spülluftstrom permanent ansteht, auch wenn über den Auslass 44 des Membrantrockners 20 keine Nutzluftentnahme erfolgt.

Die Pfeile verdeutlichen den Strömungsverlauf des Fluids insbesondere der Druckluft innerhalb des Membrantrockners 20 Die Druckluft wird durch den Einlass 26 in den Membrantrockner 20 geleitet, gelangt durch das Innenrohr 28 und das Kernrohr 30 in den Austrittsraum 32 und strömt von dort durch den Gehäuseringraum 34 durch die Hohlfasern 36 zurück zum Gehäusekopf 22 und durch den Auslass 44 wieder hinaus. Beim Durchströmen der Hohlfasern 36 diffundiert die Feuchtigkeit der Druckluft durch die Hohlfaserwandungen nach außen.

Ein Teilstrom der getrockneten Druckluft wird relativ kurz vor dem Auslass 44 umgeleitet und als Spülluft in den Außenraum der Hohlfasern geleitet, nimmt dort den diffundierten Wasserdampf auf und leitet diesen dann durch einen Spülluftausgang 46 in die Umgebung ab.

Die Halteelemente 38 für die Hohlfasern 36 sind derart konstruiert, dass die Druckluft ausschließlich durch das Innere der Hohlfasern 36 strömen kann. Somit befindet sich im Außenraum zwischen den Hohlfasern 36 lediglich Spülluft C.

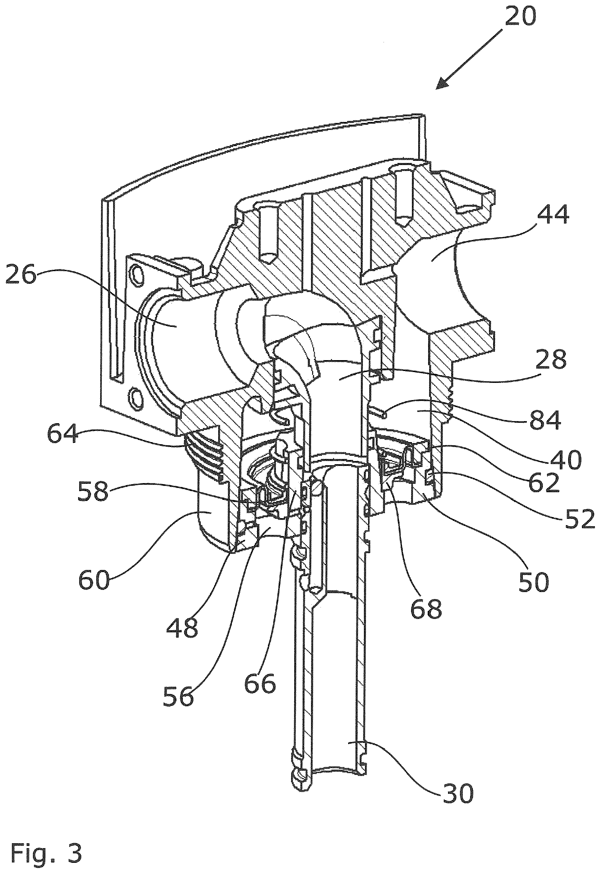

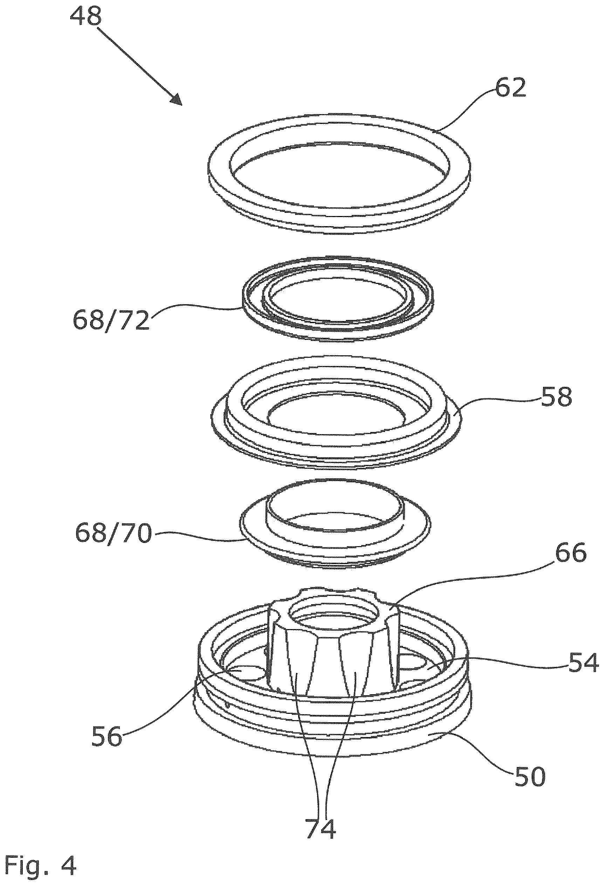

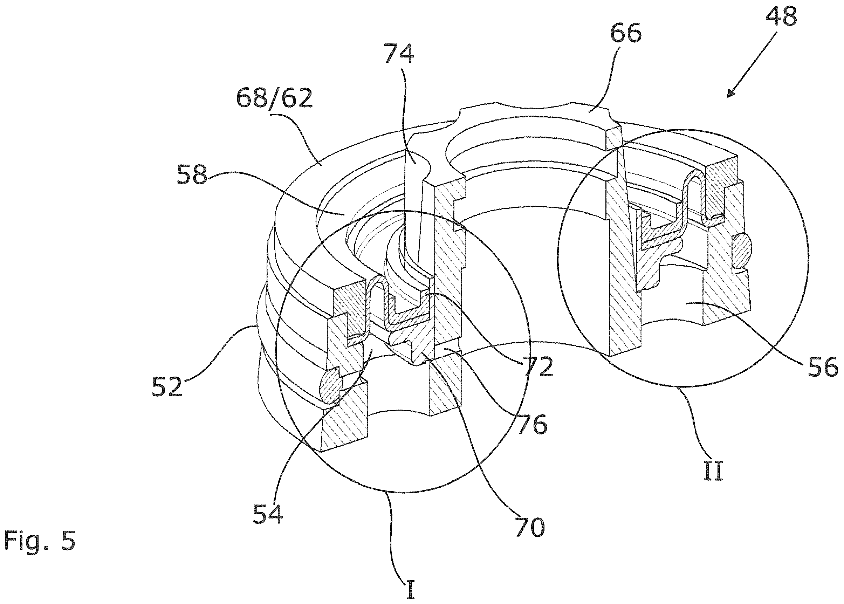

Figur 3 zeigt in der ersten geschnittenen Prinzipdarstellung einen erfindungsgemäßen Gehäusekopf 22 mit einem Spülluftschalter 48. Der Aufbau des Spülluftschalters 48 wird insbesondere aus den Figuren 4 und 5 deutlich. Der Spülluftschalter 48 weist einen Grundkörper 50 auf, der im gezeigten Ausführungsbeispiel freie Enden sowohl des Innenrohrs 28 als auch des Kernrohrs 30 umgibt. Der Gehäusekopf 22 weist einen Gehäusabschnitt 60 mit einem Außengewinde 64 auf, auf das das Gehäuse 24 aufschraubbar ist. Der Gehäuseabschnitt 60 verläuft koaxial zum geraden Anteil des Innenrohrs 28, das in das Kernrohr 30 übergeht.

Der Grundkörper 50 ist über Dichtungsringe 52 gegen das Innenrohr 28 und das Kernrohr 30 abgedichtet. Im gezeigten Ausführungsbeispiel erstreckt sich der Grundkörper 50 über den gesamten Ringraum 40 und weist eine topfartige Grundform auf. In eine Bodenfläche 54 des Grundkörpers 50 sind Durchgangsöffnungen 56 eingebracht, durch die Druckluft hindurchleitbar ist. Auf der strömungsabgewandten Seite der Durchgangsöffnungen 56 ist eine Rollmembran 58 angeordnet, die sich ebenfalls über den gesamten Ringraum 40 erstreckt. Die Rollmembran 58 ist an ihrer dem Gehäuseabschnitt 60 zugewandten Seite über einen Spannring 62 fest gehalten. Der Grundkörper 50 ist in Strömungsrichtung der trockenen Druckluft B unmittelbar vor der Rollmembran 58 angeordnet.

Der Grundkörper 50 umgibt das Innenrohr 28 mit einer Ventilringführung 66. Auf dieser Ventilringführung 66 ist ein Ventilring 68 gehalten, der entlang der Längsachse X-X, die entlang des Kernrohrs 30 und des geraden Anteils des Innenrohrs 28 verläuft, verschiebbar.

Der Ventilring 68 ist aus einem Ventilunterteil 70 und einem Ventiloberteil 72 gebildet, zwischen denen die Rollmembran 58 gehalten ist (vgl. Figur 4). Dies führt dazu, dass bei einer Bewegung des Rollmembran 58 entlang der Längsachse X-X des Ventilrings 68 ebenfalls bewegt wird. Auch der Grundkörper 50 weist auf seiner Außenseite einen Dichtungsring 52 auf, der gegen den Gehäuseabschnitt 60 abdichtet.

Insbesondere Figur 5 verdeutlicht, dass entlang der Längsachse X-X im gezeigten Ausführungsbeispiel in der Ventilringführung 66 mehrere Überströmkanäle 74 vorhanden sind, die gleichmäßig um das Innenrohr 28 verteilt angeordnet sind. Die Überströmkanäle 74 sind durch Nuten gebildet, deren Tiefe in Strömungsrichtung der Druckluft zunimmt. Dies ist insbesondere auf der rechten Seite in Figur 5 erkennbar. Der Verlauf innerhalb der Nuten ist somit konisch.

Figur 5 zeigt den Ventilring 68 in seiner Ausgangslage, in der er auf der Bodenfläche 54 des Grundkörpers 50 aufsitzt. In dieser Position sind die Überströmkanäle 74 verschlossen, so dass keine trockene Druckluft hindurchströmen kann.

Figur 5 zeigt weiterhin einen Spülluftkanal 76, der im Ringraum 40 zwischen der Bodenfläche 54 und der Rollmembran 58 beginnt. Durch diesen Spülluftkanal 76 wird trockene Druckluft B abgezweigt und in Richtung der Hohlfasern 36 umgeleitet. Erkennbar ist, dass der Spülluftkanal 76 in der Ausgangslage des Ventilrings 68 durch diesen weitgehend verschlossen ist.

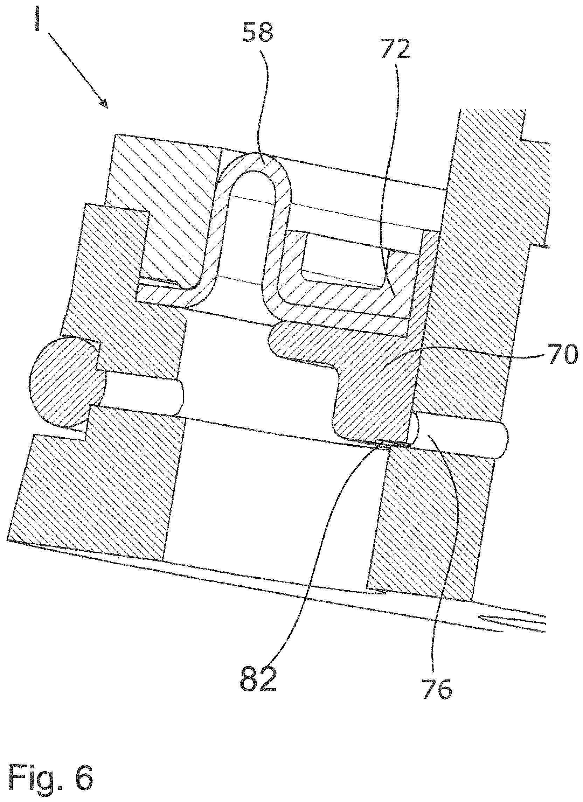

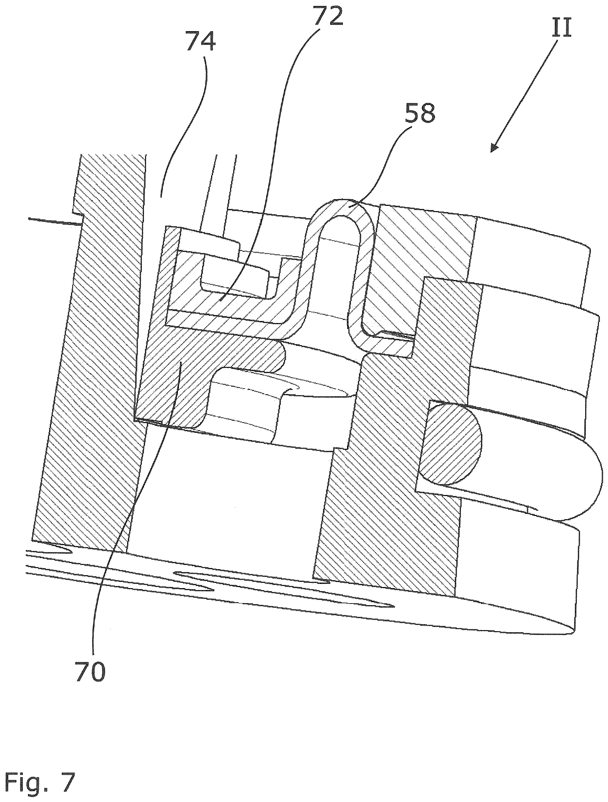

Die Ausgangslage des Ventilrings 68, der Spülluftkanal 76 und ein Überströmkanal 74 sind in den Figuren 6 und 7 in vergrößerter Darstellung besser erkennbar.

Die Rollmembran 58 weist eine Anströmseite 78 und eine Abströmseite 80 auf, wobei die Anströmseite 78 der ankommenden getrockneten Druckluft bzw. dem Gehäuse 24 und die Abströmseite 80 dem Gehäusekopf 22 bzw. dem Auslass 44 zugewandt ist.

Der Ventilring 68 weist im Bereich des Spülluftkanals 76 einen Durchlass 82 auf, der durch einen Absatz gebildet ist. Dieser Durchlass 82 bzw. Absatz bewirkt, dass auch in Ausgangslage des Ventilrings 68 permanent ein geringer Anteil an trockener Druckluft B als Schleichluft D durch den Spülluftkanal 76 entweichen kann. Diese Schleichluft D dient als Kontrolluft für das Gesamtsystem.

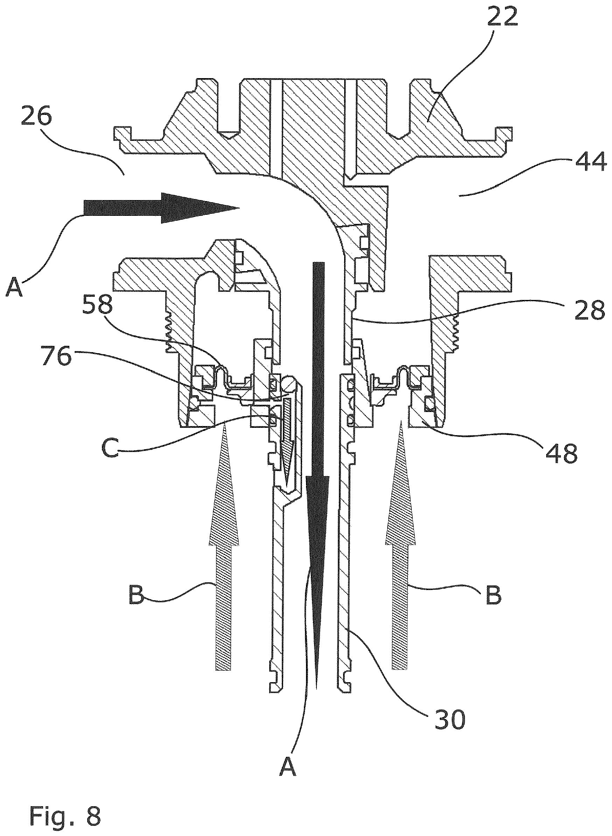

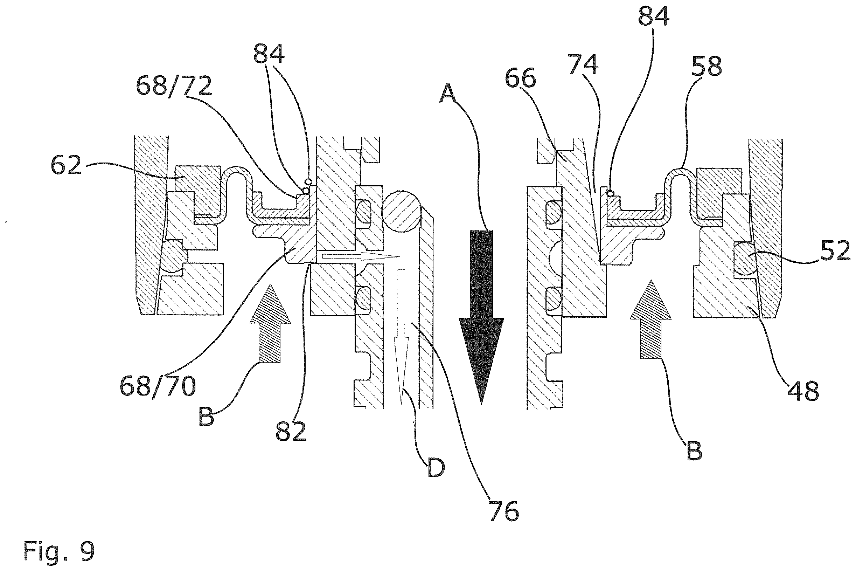

Die Figuren 8 bis 10 verdeutlichen die Strömung der Druckluft durch den Gehäusekopf 22 im Bereich des Spülluftschalters 48. Die Figuren 8 und 9 zeigen den Ventilring 68 in seiner Ausgangslage. Erkennbar ist, dass Druckluft auf die Anströmseite 78 der Rollmembran 58 trifft. Da keine Druckluftentnahme erfolgt, bleibt der Ventilring 68 in seiner Ausgangslage und verschließt sowohl die Überströmkanäle 74 als auch den Spülluftkanal 76. Figur 9 verdeutlicht auch, dass lediglich ein geringer Anteil an Druckluft als Schleichluft D durch den Durchlass 82 ausgeleitet wird. Der Spülluftkanal 76 weist einen ersten Abschnitt auf, der im Wesentlichen quer zur Längsachse X-X verläuft, einen zweiten Abschnitt der parallel zur Längsachse X-X verläuft und einen dritten Abschnitt, der wieder quer zur Längsachse X-X verläuft. Der Spülluftkanal 76 leitet somit die Spülluft C und die Schleichluft D um und leitet diese gegen die grundsätzliche Strömungsrichtung innerhalb des Gehäuses 24 zurück in den Gehäuseringraum 34 in den Bereich zwischen die Halteelemente38 der Hohlfasern 36. Dort strömt die trockene Druckluft B außen zwischen den Hohlfasern 36 zum Spülluftausgang 46.

Weiterhin ist beispielsweise in Fig. 9 ein Federelement 84 angedeutet, welches den Ventilring 68 in seiner Ausgangslage hält. Nur wenn der durch die Druckluft erzeugte Druck die Federkraft des Federelements 68 übersteigt, hebt der Ventilring 68 von der Bodenfläche 54 ab.

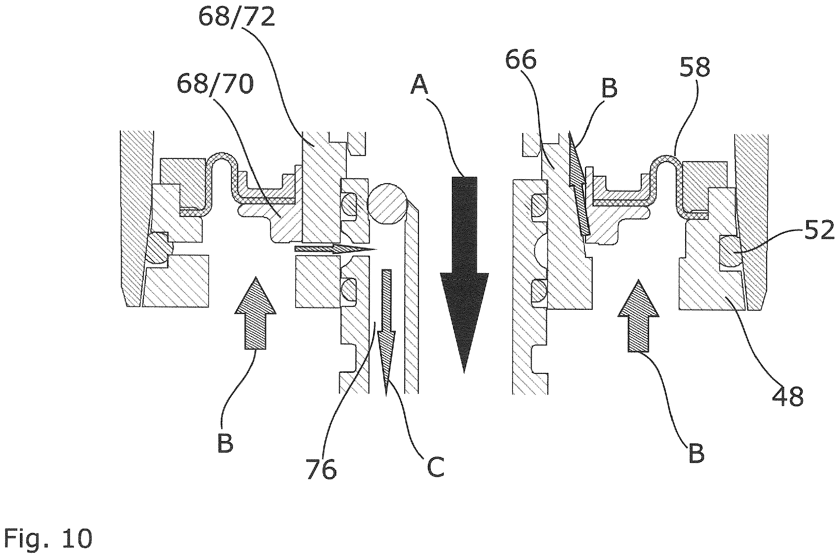

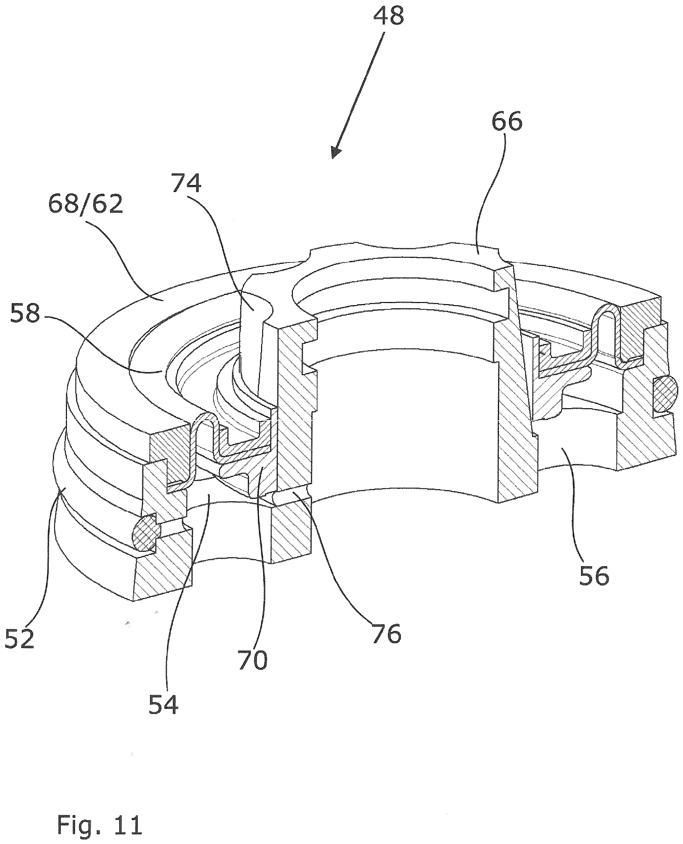

Figuren 10 und 11 zeigen den Ventilring 68 in abgehobener Position, in der er nicht auf der Bodenfläche 54 aufliegt. Deutlich erkennbar ist, dass der Spülluftkanal 76 und die Überströmkanäle 74 freigegeben sind. Insbesondere Figur 10 verdeutlicht die Funktionsweise der sich vertiefenden Nut bzw. die kontinuierliche Weitung der Überströmkanäle 74 in Strömungsrichtung. Je weiter der Ventilring 68 von der Bodenfläche 54 beabstandet ist, desto größer wird der Durchmesser der freien Öffnung für die Druckluft.

Die Erfindung ist nicht auf das gezeigte Ausführungsbeispiel beschränkt, dieses stellt lediglich eine erste Ausführungsvariante der Erfindung dar. Beispielsweise können die Überströmkanäle 74 auch im Ventilring 68 angeordnet sein. Denkbar ist auch, dass der Ventilring 68 mit der Rollmembran 58 im äußeren Bereich abhebt und am Innenrohr 28 unbeweglich gehalten ist.

## Patentansprüche

1. Gehäusekopf (22) für eine Trocknungsvorrichtung für Druckluft, der mit einem Gehäuse (24) verbindbar ist, in dem ein Membranfilter, vorzugsweise ein Bündel Hohlfasermembranen, angeordnet ist, mit
a) einem Einlass (26) für feuchte Druckluft (A), der in ein Innenrohr (28) übergeht, das zumindest abschnittsweise koaxial von einem Gehäuseabschnitt (60) umgeben ist,
b) einem Auslass (44) für getrocknete Druckluft (B), der in einen Ringraum (40) übergeht, der zwischen einer Außenseite des Innenrohrs (28) und einer Innenseite des Gehäuseabschnitts (60) ausgebildet ist,
wobei
- eine Ventilringführung (66) eines Grundkörpers (50) das Innenrohr (28) umgibt und an diesem unbeweglich gehalten ist,
- im Ringraum (40) eine ringförmige Rollmembran (58) angeordnet ist, die an ihrer Außenseite gehalten und an ihrer Innenseite mit einem Ventilring (68) verbunden ist, der die Ventilringführung (66) des Grundkörpers (50) umgibt und entlang einer Längsachse (X-X) der Ventilringführung (66) bewegbar ist,
- zwischen dem Ventilring (68) und der Ventilringführung (66) zumindest ein Überströmkanal (74) angeordnet ist, der in Strömungsrichtung der Druckluft an der Rollmembran (58) vorbei verläuft und durch den Ventilring (68) in seiner Ausgangsstellung, in der im Wesentlichen keine Druckluftanforderung besteht, verschlossen ist,
- die Ventilringführung (66) einen Spüluftkanal (76) aufweist, durch den trockene Druckluft (B) zurück in Richtung des Membranfilters leitbar und der durch den Ventilring (68) in seiner Ausgangsstellung im Wesentlichen verschlossen ist.

2. Gehäusekopf (22) nach Anspruch 1, **dadurch gekennzeichnet, dass** der Ventilring (68) im Bereich seiner Anlage am Spülluftkanal (76) einen Durchlass aufweist, durch den permanent trockene Schleichluft (D) in den Spülluftkanal (76) geleitet wird.

3. Gehäusekopf (22) nach Anspruch 1 oder Anspruch 2, **dadurch gekennzeichnet, dass** sich der Grundkörper (50) in Strömungsrichtung der trockenen Druckluft (B) unmittelbar vor der Rollmembran über den gesamten Ringraum (40) erstreckt und eine topfartige Grundform aufweist, wobei in eine Bodenfläche (54) des Grundkörpers (50) Durchgangsöffnungen (56) eingebracht sind.

4. Gehäusekopf (22) nach einem der Ansprüche 1 bis 3, **dadurch gekennzeichnet, dass** der mindestens eine Überströmkanal (74) durch eine Nut in der Ventilringführung (66) gebildet ist.

5. Gehäusekopf (22) nach Anspruch 4, **dadurch gekennzeichnet, dass** die Tiefe der Nut in Strömungsrichtung der trockenen Druckluft (B) zunimmt.

6. Gehäusekopf (22) nach einem der Ansprüche 1 bis 5, **dadurch gekennzeichnet, dass** mehrere Überströmkanäle (74) vorgesehen sind, die gleichmäßig um das Innenrohr (28) in der Ventilringführung (66) verteilt angeordnet sind.

7. Gehäusekopf (22) nach einem der Ansprüche 1 bis 6, **dadurch gekennzeichnet, dass** der Spülluftkanal (76) einen ersten Abschnitt aufweist, der im Wesentlichen quer zur Längsachse (X-X) der Ventilringführung (66) verläuft, einen zweiten Abschnitt der parallel zur Längsachse (X-X) der Ventilringführung (66) verläuft und einen dritten Abschnitt, der wieder quer zur Längsachse (X-X) verläuft und im Gehäuseringraum (34) zwischen Halteelementen der Hohlfasern (36) endet.

8. Gehäusekopf (22) nach einem der Ansprüche 1 bis 7, **dadurch gekennzeichnet, dass** Federelement (84) vorgesehen ist, welches den Ventilring (68) dann in seiner Ausgangslage hält, wenn keine trockene Druckluft (B) angefordert wird.

9. Gehäusekopf (22) nach Anspruch 8, **dadurch gekennzeichnet, dass** das Federelement (84) durch eine Schraubenfeder gebildet ist, die zwischen dem Ventilring (68) und einer Abstützfläche im Inneren des Gehäusekopfes (22) angeordnet ist.

## Claims

1. A housing head (22) for a drying apparatus for compressed air, which can be connected to a housing (24) in which a diaphragm filter, preferably a bundle of hollow fiber diaphragms, is arranged, comprising:
a) an inlet (26) for moist compressed air (A), which transitions into an inner pipe (28) which, at least in some sections, is coaxially surrounded by a housing portion (60),
b) an outlet (44) for dried compressed air (B), which transitions into an annular chamber (40) formed between an outer face of the inner pipe (28) and an inner face of the housing portion (60),
wherein
- a valve ring guide (66) of a basic body (50) surrounds the inner pipe (28) and is held immovably thereon,
- an annular rolling diaphragm (58), which is held at its outer face and connected at its inner face to a valve ring (68) that surrounds the valve ring guide (66) of the basic body (50) and is movable along a longitudinal axis (X-X) of the valve ring guide (66), is disposed in the annular chamber (40),
- at least one flow transfer duct (74), which runs past the rolling diaphragm (58) in the flow direction of the compressed air and is closed off by the valve ring (68) in the initial position of the latter, in which there is substantially no demand for compressed air, is disposed between the valve ring (68) and the valve ring guide (66),
- the valve ring guide (66) has a flushing gas duct (76) through which dry compressed air (B) can be conducted back in the direction of the diaphragm filter and which is substantially closed off by the valve ring (68) in the initial position of the latter.

2. The housing head (22) according to claim 1, **characterized in that** the valve ring (68), in the region of its contact with the flushing gas duct (76), has a passageway through which dry creeping air (D) is permanently conducted into the flushing gas duct (76).

3. The housing head (22) according to claim 1 or claim 2, **characterized in that** the basic body (50), in the flow direction of the dry compressed air (B), extends, directly in front of the rolling diaphragm, across the entire annular chamber (40) and has a pot-like basic shape, wherein through-holes (56) are incorporated into a bottom surface (54) of the basic body (50).

4. The housing head (22) according to any one of the claims 1 to 3, **characterized in that** the at least one flow transfer duct (74) is formed by a groove in the valve ring guide (66).

5. The housing head (22) according to claim 4, **characterized in that** the depth of the groove increases in the flow direction of the dry compressed air (B).

6. The housing head (22) according to any one of the claims 1 to 5, **characterized in that** several flow transfer ducts (74) are provided that are disposed in a uniformly distributed manner about the inner tube (28) in the valve ring guide (66).

7. The housing head (22) according to any one of the claims 1 to 6, **characterized in that** the flushing air duct (76) has a first portion extending substantially transversely to the longitudinal axis (X-X) of the valve ring guide (66), a second portion extending parallel to the longitudinal axis (X-X) of the valve ring guide (66), and a third portion again extending transversely to the longitudinal axis (X-X) and ending in the housing annular chamber (34) between retaining members of the hollow fibers (36).

8. The housing head (22) according to any one of the claims 1 to 7, **characterized in that** a spring member (84) is provided, which retains the valve ring (68) in its original position when no dry compressed air (B) is demanded.

9. The housing head (22) according to claim 8, **characterized in that** the spring member (84) is formed by a helical spring disposed between the valve ring (68) and a support surface in the interior of the housing head (22).

## Revendications

1. Tête de boîtier (22) pour un dispositif de séchage pour air comprimé, qui peut être connectée à un boîtier (24) à l'intérieur duquel est agencé un filtre à membrane, de préférence un faisceau de membranes à fibres creuses, comprenant
a) une entrée (26) pour de l'air comprimé humide (A) laquelle débouche dans un tube intérieur (28) qui est entouré, au moins par sections, de façon coaxiale par une portion de boîtier (60),
b)une sortie (44) pour de l'air comprimé séché (B) laquelle débouche dans un espace annulaire (40) qui est réalisé entre une face extérieure dudit tube intérieur (28) et une face intérieure de ladite portion de boîtier (60),
dans laquelle
- un guide d'anneau de vanne (66) d'un corps de base (50) entoure le tube intérieur (28) et est maintenu de manière immobile sur celui-ci,
- dans ledit espace annulaire (40) est disposée une membrane roulante annulaire (58) qui est maintenue sur sa face extérieure et est reliée sur sa face intérieure à un anneau de vanne (68) qui entoure ledit guide d'anneau de vanne (66) du corps de base (50) et est déplaçable le long d'un axe longitudinal (XX) du guide d'anneau de vanne (66),
- entre ledit anneau de vanne (68) et ledit guide d'anneau de vanne (66) est disposé au moins un canal de trop-plein (74) qui passe devant la membrane roulante (58) dans le sens d'écoulement de l'air comprimé et est fermé par ledit anneau de vanne (68) dans sa position initiale dans laquelle il n'y a pour l'essentiel pas de demande en air comprimé,
- ledit guide d'anneau de vanne (66) présente un canal d'air de rinçage (76) à travers lequel de l'air comprimé sec (B) peut être redirigé en direction du filtre à membrane et qui est pour l'essentiel fermé par l'anneau de vanne (68) dans sa position initiale.

2. Tête de boîtier (22) selon la revendication 1, **caractérisée par le fait que** l'anneau de vanne (68) présente un passage au niveau de son appui sur le canal d'air de rinçage (76), à travers lequel de l'air rampant sec (D) est dirigé en permanence dans ledit canal d'air de rinçage (76).

3. Tête de boîtier (22) selon la revendication 1 ou la revendication 2, **caractérisée par le fait que** le corps de base (50) s'étend dans le sens d'écoulement de l'air comprimé sec (B) immédiatement devant la membrane roulante sur tout l'espace annulaire (40) et présente une forme de base de type pot, des ouvertures de passage (56) étant pratiquées dans une surface de fond (54) du corps de base (50).

4. Tête de boîtier (22) selon l'une quelconque des revendications 1 à 3, **caractérisée par le fait que** ledit au moins un canal de trop-plein (74) est formé par une rainure dans le guide d'anneau de vanne (66).

5. Tête de boîtier (22) selon la revendication 4, **caractérisée par le fait que** la profondeur de la rainure augmente dans le sens d'écoulement de l'air comprimé sec (B).

6. Tête de boîtier (22) selon l'une quelconque des revendications 1 à 5, **caractérisée par le fait que** plusieurs canaux de trop-plein (74) sont prévus qui sont disposés de manière à être uniformément répartis autour du tube intérieur (28) dans le guide d'anneau de vanne (66).

7. Tête de boîtier (22) selon l'une quelconque des revendications 1 à 6, **caractérisée par le fait que** le canal d'air de rinçage (76) présente une première section qui s'étend pour l'essentiel transversalement à l'axe longitudinal (XX) du guide d'anneau de vanne (66), une deuxième section qui s'étend parallèlement à l'axe longitudinal (X-X) du guide d'anneau de vanne (66) ainsi qu'une troisième section qui s'étend lui aussi transversalement à l'axe longitudinal (XX) et se termine dans l'espace annulaire de boîtier (34) entre des éléments de maintien des fibres creuses (36).

8. Tête de boîtier (22) selon l'une quelconque des revendications 1 à 7, **caractérisée par le fait qu'**un élément formant ressort (84) est prévu qui maintient ledit anneau de vanne (68) dans sa position de départ lorsqu'aucun air comprimé sec (B) n'est demandé.

9. Tête de boîtier (22) selon la revendication 8, **caractérisée par le fait que** l'élément formant ressort (84) est formé par un ressort hélicoïdal qui est disposé entre l'anneau de vanne (68) et une surface d'appui à l'intérieur de la tête de boîtier (22).
